# FASCICULE DE BREVET EUROPEEN

(11) **EP 3 356 718 B1**
(45) Date de publication et mention de la délivrance du brevet: **02.01.2019**
(21) Numéro de dépôt: 17811554.9
(22) Date de dépôt: 06.12.2017
(51) Int. Cl.: F16L 25/12, F16L 37/12, F16L 37/138

(54) **CIRCUIT DE FLUIDE ET PROCEDE DE REALISATION D'UN TEL CIRCUIT**
FLUIDKREISLAUF SOWIE DESSEN HERSTELLUNGSVERFAHREN
FLUID CIRCUIT AND PROCESS TO REALISE SUCH CIRCUIT

(30) Priorité: 19.12.2016 FR 1662701
(43) Date de publication de la demande: 08.08.2018
(73) Titulaire: Stelia Aerospace, 17300 Rochefort (FR)
(72) Inventeur: SIREUDE, Damien, 44300 Nantes (FR); PERHERIN, Daniel, 29930 Pont Aven (FR); ALETRUT, Thierry, 31490 Leguevin (FR); SOLANA, Pascal, 31700 Mondonville (FR); ROUYARD, Dimitri, 44600 Saint-Nazaire (FR)
(74) Mandataire: Argyma
(86) Numéro de dépôt international: PCT/EP2017/081732
(87) Numéro de publication internationale: WO 2018/114342

(56) Documents cités:
- EP-A1- 0 616 161
- DE-U1-202008 001 778
- FR-A1- 2 933 474
- US-A- 3 495 853
- US-A1- 2004 239 117

## Description

### DOMAINE TECHNIQUE GENERAL ET ART ANTERIEUR

La présente invention concerne le domaine des circuits de fluide dans un aéronef, par exemple, un circuit d'eau potable, d'eaux usées, de drainage, etc.

De manière connue, un circuit de fluide comporte une pluralité de canalisations reliées mécaniquement et fluidiquement entre elles. Lors de la mise en place d'un circuit de fluide dans un aéronef, les canalisations sont solidarisées de manière indépendante à la structure de l'aéronef puis raccordées entre elles fluidiquement. Autrement dit, les canalisations ne sont pas mobiles les unes par rapport aux autres mais fixes lors d'un raccordement, à l'exception des dilatations thermiques. En pratique, un faible jeu axial peut être envisagé pour permettre la prise en compte des déformations ou déplacement relatifs entre les canalisations et la structure porteuse environnante.

Pour raccorder une première canalisation à une deuxième canalisation, il est connu d'utiliser un manchon élastique afin de joindre les deux extrémités des canalisations. Pour assurer l'étanchéité entre le manchon et chaque canalisation, un collier de serrage doit être monté à chaque extrémité du manchon. Un tel raccordement présente de nombreux inconvénients. En effet, la mise en place du manchon et des colliers de serrage est chronophage et peu pratique, ce qui augmente le coût de mise en place d'un circuit de fluide. On connaît par ailleurs un dispositif de raccordement par la demande de brevet EP0616161 comportant des griffes mécaniques mais ces dernières sont susceptibles de rayer/blesser les canalisations, ce qui n'est pas acceptable pour une application qualitative dans le domaine aéronautique.

L'invention a donc pour but de remédier à ces inconvénients en proposant un nouveau type de circuit de fluide et un nouveau procédé de réalisation d'un tel circuit de fluide, en particulier, pour une application aéronautique.

### PRESENTATION GENERALE DE L'INVENTION

A cet effet, l'invention concerne un circuit de fluide, en particulier pour aéronef, comprenant une première canalisation, une deuxième canalisation et un raccord de liaison,
- chaque canalisation comportant une extrémité de connexion, s'étendant selon un axe X et définissant une surface intérieure et une surface extérieure, qui comporte un organe de blocage s'étendant en saillie radiale par rapport audit axe X depuis la surface extérieure, les extrémités de connexion des canalisations étant fixes et espacées d'un jeu de raccordement axial,
- le raccord de liaison comprenant :
   ∘ un manchon extérieur qui s'étend selon l'axe X et est monté coulissant selon l'axe X à l'extrémité de connexion de la première canalisation, le manchon extérieur étant configuré pour relier les deux extrémités de connexion lors d'un déplacement d'amont en aval,
   ∘ un organe d'étanchéité qui s'étend selon l'axe X et est monté coulissant selon l'axe X dans ledit manchon extérieur, l'organe d'étanchéité étant configuré pour relier de manière étanche les deux extrémités de connexion,
   ∘ des moyens de verrouillage configurés pour coopérer avec l'organe de blocage de la deuxième canalisation pour bloquer la translation dudit manchon extérieur en amont vers la première canalisation,
- le raccord étant configuré pour déplacer l'organe d'étanchéité entre les deux extrémités de connexion pour assurer l'étanchéité lors du déplacement du manchon extérieur vers l'aval jusqu'à l'organe de blocage de la deuxième canalisation.

Grâce à l'invention, deux canalisations éloignées d'un jeu de raccordement axial peuvent être connectées physiquement et fluidiquement par simple déplacement vers l'aval du raccord de liaison. En effet, le raccord de liaison permet, d'une part, de solidariser physiquement les canalisations ensemble grâce au manchon extérieur et, d'autre part, de connecter fluidiquement les canalisations grâce à l'organe d'étanchéité. De manière avantageuse, le manchon extérieur permet de mettre en place de manière précise l'organe d'étanchéité à l'interface entre les canalisations, ce qui assure une étanchéité optimale.

En outre, un tel raccord de liaison permet à un opérateur de raccorder les canalisations de manière simple et pratique, par simple déplacement du manchon extérieur sur la première canalisation. Un raccordement peut ainsi être réalisé à une seule main par un opérateur.

De plus, le raccord de liaison possède peu d'éléments de structure simple qui peuvent être fabriqués à un coût limité, ce qui est avantageux.

De manière préférée, l'organe d'étanchéité est amovible du manchon extérieur, ce qui permet avantageusement de remplacer ledit organe d'étanchéité en cas d'usure.

De préférence, le manchon extérieur comprend des premiers moyens de butée configurés pour coopérer avec l'organe d'étanchéité afin de le déplacer concomitamment au déplacement du manchon extérieur vers l'aval. Ainsi, l'organe d'étanchéité est en attente avant le raccordement et est déplacé en position d'utilisation uniquement lorsqu'un raccordement est désiré.

De manière préférée, les premiers moyens de butée se présentent sous la forme d'une première paroi de butée intérieure, de préférence, annulaire.

De préférence encore, les premiers moyens de butée s'étendent de manière radiale extérieure à l'organe de blocage de la première canalisation par rapport à l'axe X. Ainsi, les premiers moyens de butée n'entrent pas en contact avec l'organe de blocage lors du déplacement aval.

Selon un aspect de l'invention, le manchon extérieur comprend des deuxièmes moyens de butée configurés pour coopérer avec l'organe de blocage de la première canalisation pour empêcher le retrait du manchon extérieur de la première canalisation. Ainsi, le manchon extérieur ne peut pas être retiré de la première canalisation vers l'aval du fait de la présence de l'organe de blocage.

De manière préférée, le manchon extérieur comportant une extrémité amont destinée à s'étendre du côté de la première canalisation en position verrouillée et une extrémité aval destinée à s'étendre du côté de la deuxième canalisation en position verrouillée, les moyens de verrouillage sont montés à l'extrémité aval du manchon extérieur.

De préférence, les moyens de verrouillage sont configurés pour s'étendre en aval de l'organe de blocage de la deuxième canalisation en position verrouillée. Ainsi, le manchon extérieur ne peut plus se déplacer vers l'amont.

Selon un aspect préféré, les moyens de verrouillage étant déformables entre son état verrouillé et son état déverrouillé, le raccord de liaison comporte des moyens de sécurisation configurés pour empêcher une déformation des moyens de verrouillage à l'état verrouillé. Ainsi, le verrouillage est automatique lors du déplacement du manchon extérieur. De tels moyens de verrouillage permettent en outre d'éviter toute blessure/rayure des canalisations, ce qui est primordial pour une application aéronautique.

De préférence, les moyens de verrouillage sont configurés pour se déformer radialement lors de son contact avec l'organe de blocage de la deuxième canalisation lors du déplacement du raccord de liaison vers l'aval. De manière préférée, l'organe de blocage de la deuxième canalisation comporte à cet effet une paroi évasée de manière à guider la déformation des moyens de verrouillage. De préférence, les moyens de verrouillage sont adaptés pour se déformer sous l'effet d'un effort mécanique appliqué par l'opérateur. De préférence encore, les moyens de verrouillage sont en matériau élastique de manière à se rétracter radialement après contact avec l'organe de blocage de la deuxième canalisation.

De préférence, les moyens de verrouillage se présentent sous la forme d'un organe de verrouillage périphérique monté intérieurement au manchon extérieur. De préférence encore, l'organe de verrouillage comporte deux mâchoires articulées adaptées pour être ouvertes à l'état déverrouillé et fermées à l'état verrouillé.

De manière préférée, l'extrémité aval du manchon extérieur comporte une ouverture de verrouillage permettant l'accès audit organe de verrouillage, les moyens de sécurisation sont montés dans ladite ouverture. Ainsi, l'opérateur peut manuellement sécuriser les moyens de verrouillage.

De préférence, les canalisations sont réalisées en matière plastique.

De manière préférée, chaque canalisation comporte au moins une extrémité de connexion avec un raccord de liaison et au moins une extrémité de connexion sans raccord de liaison afin de permettre un raccordement en série de plusieurs canalisations.

De manière préférée, l'organe d'étanchéité comporte au moins un joint d'étanchéité amont apte à coopérer avec l'extrémité de connexion de la première canalisation et au moins un joint d'étanchéité aval apte à coopérer avec l'extrémité de connexion de la deuxième canalisation.

L'invention concerne également un aéronef comportant un circuit de fluide tel que présenté précédemment, dans lequel la première canalisation et la deuxième canalisation sont solidarisées à une structure de l'aéronef, les extrémités de connexion des canalisations étant fixes et espacées d'un jeu de raccordement axial.

L'invention concerne en outre un procédé de réalisation d'un circuit de fluide selon l'invention, les extrémités de connexion des canalisations étant fixes et espacées d'un jeu de raccordement axial, le raccord de liaison s'étendant sur l'extrémité de connexion de la première canalisation, le procédé comprend :
- une étape de déplacement de l'amont vers l'aval du manchon extérieur du raccord de liaison jusqu'à l'organe de blocage de la deuxième canalisation de manière à déplacer l'organe d'étanchéité entre les deux extrémités de connexion pour assurer l'étanchéité entre les deux canalisations et
- une étape de verrouillage du manchon extérieur sur la deuxième canalisation.

Ainsi, les canalisations sont reliées physiquement et fluidiquement de manière simple et pratique par un opérateur, de manière préférée, au moyen d'une seule main. De manière préférée, l'étape de verrouillage est réalisée automatiquement lors du déplacement vers l'aval.

De manière préférée, le procédé de réalisation comprend une étape de sécurisation du verrouillage du manchon extérieur sur la deuxième canalisation de manière à empêcher tout déverrouillage involontaire. De préférence, en position verrouillée, les moyens de verrouillage s'étendent en aval de l'organe de blocage de la deuxième canalisation.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un circuit de fluide selon l'invention comportant deux canalisations raccordées ;
- la figure 2 est une représentation schématique d'une canalisation selon une forme de réalisation selon l'invention ;
- la figure 3 est une représentation schématique en coupe d'un circuit de fluide selon l'invention comportant deux canalisations non raccordées ;
- la figure 4 est une représentation schématique d'un raccord selon une forme de réalisation selon l'invention ;
- les figures 5 à 8 représentent, en vue en coupe, des étapes de raccordement de deux canalisations selon une mise en oeuvre du procédé de réalisation selon l'invention ;
- la figure 9 est représentation en perspective des canalisations raccordées ;
- la figure 10 est une représentation schématique en coupe des étapes de déplacement du manchon extérieur au cours du raccordement ;
- la figure 11 est une représentation schématique en coupe partielle d'une canalisation équipée d'un bouchon ; et
- la figure 12 est une représentation schématique en coupe d'une autre forme de réalisation d'un raccord de liaison selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

Il va être dorénavant présenté un circuit de fluide selon l'invention destiné à un usage aéronautique, en particulier, pour le transport de carburant, d'eau et d'oxygène, d'air, de gaz coupe-feu...

Dans cet exemple, le circuit de fluide comprend une pluralité de canalisations qui sont accordées les unes avec les autres afin de guider un fluide. Pour une application aéronautique, les canalisations individuelles sont, dans un premier temps, solidarisées à une structure d'un aéronef puis, dans un deuxième temps, raccordées entre elles.

Par la suite, l'invention va être présentée pour le raccordement de deux canalisations d'un circuit de fluide mais il va de soi que l'invention s'applique au raccordement de plus de deux canalisations.

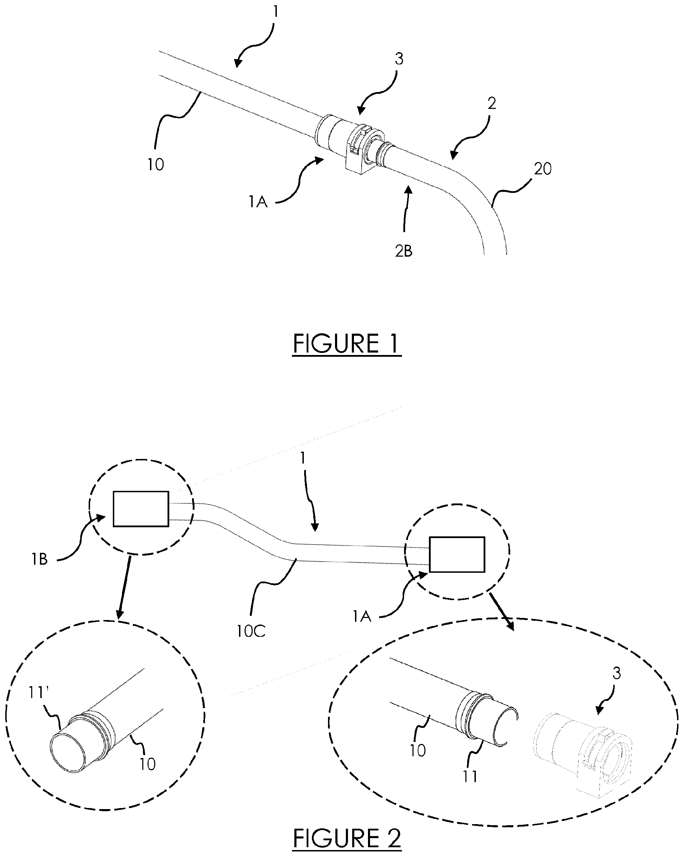

En référence à la figure 1, il est représenté une forme de réalisation d'un circuit de fluide selon l'invention qui comprend une première canalisation 1, une deuxième canalisation 2 et un raccord de liaison 3, monté sur la première canalisation 1, afin de raccorder la première canalisation 1 à la deuxième canalisation 2.

Dans cette forme de réalisation, chaque canalisation comporte un corps tubulaire qui est terminé à chaque extrémité par un embout de connexion. Ainsi, chaque embout de connexion forme une extrémité de connexion de la canalisation. Dans cette forme de réalisation, pour chaque canalisation, une extrémité de connexion est équipée d'un raccord de liaison et est désignée « extrémité de connexion active » tandis que l'autre extrémité de connexion est dépourvue de raccord de liaison et est désignée « extrémité de connexion passive ». Le corps tubulaire de chaque canalisation comporte de manière préférée des portions cintrées de manière à permettre au circuit de fluide de relier différents équipements de manière pratique en s'affranchissant des contraintes de positionnement. De plus, chaque canalisation définit une surface intérieure, en contact avec le fluide à conduire, et une surface extérieure, opposée à la surface intérieure.

Dans cet exemple, les deux canalisations 1, 2 possèdent une structure analogue, seuls les corps tubulaires des canalisations 1, 2 étant différents. Par souci de clarté et de concision, seule la première canalisation 1 va être décrite de manière détaillée, la deuxième canalisation 2 étant analogue.

En référence à la figure 2, il est représenté de manière schématique la première canalisation 1 qui comporte un corps tubulaire 10 relié, d'une part, à un premier embout 11 équipé d'un raccord de liaison 3 afin de former une extrémité de connexion active 1A et, d'autre part, un deuxième embout 11' dépourvu de raccord de liaison 3 afin de former une extrémité de connexion passive 1B. Comme illustré à la figure 2, le corps tubulaire 10 comporte une portion cintrée 10C. Le diamètre du corps tubulaire 10 et/ou de chaque extrémité de connexion de la première canalisation 1 est de préférence compris entre 6.35 mm et 50.8 mm. De manière préférée, la première canalisation 1 est réalisée en matériau plastique mais il va de soi que d'autres matériaux pourraient convenir, par exemple, un matériau métallique.

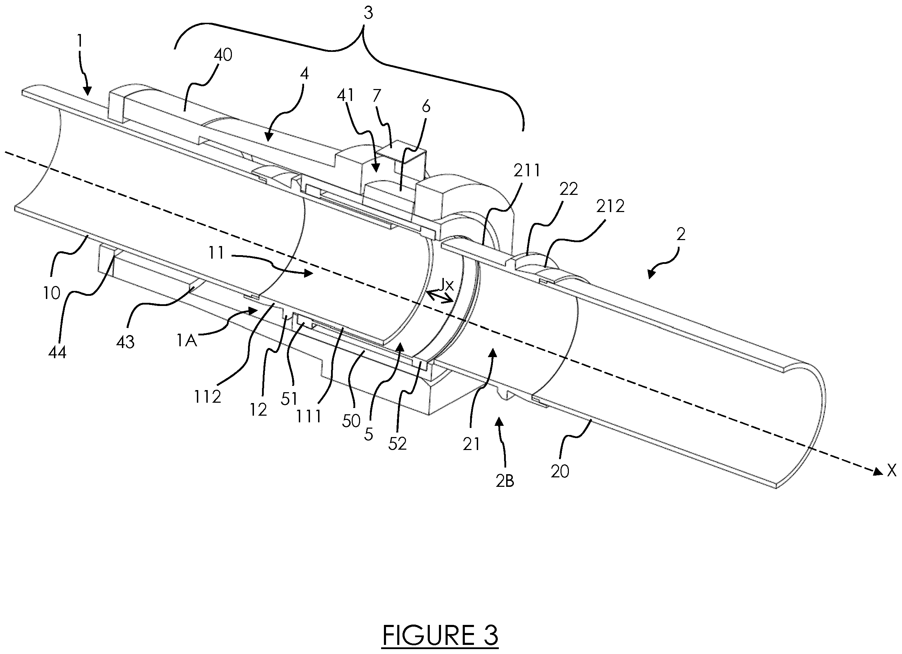

Par la suite, en référence à la figure 3, une extrémité de connexion active 1A sera présentée en référence à la première canalisation 1 tandis qu'une extrémité de connexion passive 2B sera présentée en référence à la deuxième canalisation 2 afin de présenter un raccordement des deux canalisations 1, 2.

En référence à la figure 3, les extrémités de connexion 1A, 2B sont alignées selon un axe X et sont espacées d'un jeu de raccordement axial Jx. Sur les figures, l'axe X est orienté d'amont en aval qui correspond à la direction de déplacement du raccord de liaison 3 lors d'un raccordement.

Le premier embout 11 de la première canalisation 1 comporte un organe de blocage 12 qui s'étend en saillie radiale par rapport audit axe X depuis la surface extérieure. Dans cet exemple, l'organe de blocage 12 se présente sous la forme d'une couronne annulaire mais il va de soi que d'autres formes pourraient convenir, en particulier, une couronne crénelée ou un ergot. De manière préférée, l'organe de blocage 12 possède une épaisseur axiale de l'ordre de 2 mm et une longueur radiale comprise entre 2 mm et 6 mm par rapport à l'axe X. En référence à la figure 3, le premier embout 11 comporte successivement, d'amont en aval, une première portion longitudinale 112, l'organe de blocage 12 et une deuxième portion longitudinale 111. Dans cet exemple, la première portion longitudinale 112 comporte une longueur de l'ordre de 10 mm tandis que la deuxième portion longitudinale 111 comporte une longueur de l'ordre de 13 mm.

De manière analogue, le deuxième embout 21 de la deuxième canalisation 2 comporte un organe de blocage 22 qui s'étend en saillie radiale par rapport audit axe X depuis la surface extérieure. Dans cet exemple, l'organe de blocage 22 se présente sous la forme d'une couronne annulaire mais il va de soi que d'autres formes pourraient convenir. De manière analogue, l'organe de blocage 22 possède une épaisseur axiale de l'ordre de 2 mm et une longueur radiale comprise entre 2 mm et 6 mm par rapport à l'axe X. En référence à la figure 3, le deuxième embout 21 comporte successivement, d'amont en aval, une première portion longitudinale 212, l'organe de blocage 22 et une deuxième portion longitudinale 211. Dans cet exemple, la première portion longitudinale 212 comporte une longueur de l'ordre de 10 mm tandis que la deuxième portion longitudinale 211 comporte une longueur de l'ordre de 17 mm. L'organe de blocage 22 est évasé d'amont en aval afin de permettre une déformation progressive des moyens de verrouillage du raccord de liaison comme cela sera présenté par la suite. Dans cet exemple, les embouts de connexion 11, 21 sont différents mais il va de soi qu'ils pourraient être identiques.

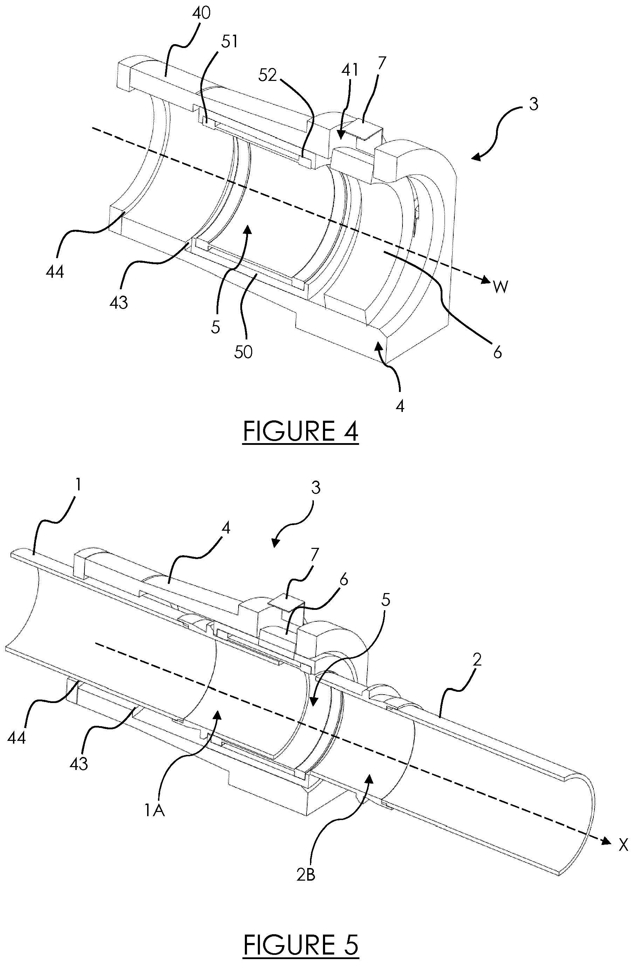

En référence aux figures 3 et 4, il est représenté une forme de réalisation préférée d'un raccord de liaison 3 selon l'invention. Le raccord de liaison 3 s'étend longitudinalement selon un axe W orienté d'amont en aval. En position montée, les axes X et W sont confondus.

Le raccord de liaison 3 comprend un manchon extérieur 4 dans lequel est monté un organe d'étanchéité 5 configuré pour relier de manière étanche les deux extrémités de connexion 1A, 2B des canalisations 1, 2, en particulier, les extrémités longitudinales 111, 211. Selon l'invention, le raccord de liaison 3 est configuré pour déplacer l'organe d'étanchéité 5 entre les deux extrémités de connexion 1A, 2B pour assurer l'étanchéité lors du déplacement du manchon extérieur 4 jusqu'à l'organe de blocage 22 de la deuxième canalisation 2. Le raccord de liaison 3 comporte en outre des moyens de verrouillage 6 configurés pour coopérer avec l'organe de blocage 22 de la deuxième canalisation 2 pour bloquer la translation dudit manchon extérieur 4 vers la première canalisation 1 et des moyens de sécurisation 7 configurés pour empêcher tout déverrouillage involontaire. Comme cela sera présenté par la suite, un tel raccord de liaison 3 permet d'être manipulé à une main par un opérateur afin de raccorder deux canalisations 1, 2 de manière pratique et fiable. Les différents éléments du raccord de liaison 3 vont dorénavant être présentés de manière détaillée.

Comme illustré à la figure 4, le manchon extérieur 4 se présente sous la forme d'une enveloppe périphérique qui s'étend axialement selon l'axe W. En position montée, le manchon extérieur 4 est adapté pour coulisser selon l'axe X sur l'extrémité de connexion active 1A de la première canalisation 1. Le manchon extérieur 4 comporte une extrémité amont destinée à s'étendre du côté de la première canalisation 1 en position verrouillée et une extrémité aval destinée à s'étendre du côté de la deuxième canalisation 2 en position verrouillée.

Dans cet exemple, le manchon extérieur 4 comprend des premiers moyens de butée configurés pour coopérer avec l'organe d'étanchéité 5 afin de le déplacer concomitamment au déplacement du manchon extérieur 4. Dans cet exemple, les premiers moyens de butée se présentent sous la forme d'une première paroi de butée 43 adaptée pour coopérer avec l'organe d'étanchéité 5. La première paroi de butée 43 est annulaire et s'étend intérieurement au manchon extérieur 4. Dans cet exemple, la première paroi de butée 43 possède un diamètre intérieur supérieur au diamètre extérieur de l'organe de blocage 12. Autrement dit, la première paroi de butée 43 s'étend de manière radiale extérieure à l'organe de blocage 12 de la première canalisation 1 par rapport à l'axe X. Ainsi, la première paroi de butée 43 n'est pas gênée par l'organe de blocage 12 pour entrer en contact avec l'organe d'étanchéité 5.

En référence à la figure 4, le manchon extérieur 4 comprend des deuxièmes moyens de butée configurés pour coopérer avec l'organe de blocage 12 de la première canalisation 1 pour empêcher le retrait du manchon extérieur 4 de la première canalisation 1. Ainsi, le manchon extérieur 4 n'est pas amovible de la première canalisation 1, ce qui facilite l'installation des canalisations. Il va de soi que le manchon extérieur 4 pourrait être amovible en cas de besoin.

Dans cet exemple, les deuxièmes moyens de butée 44 se présentent sous la forme d'une deuxième paroi de butée 44 qui est annulaire et s'étend intérieurement au manchon extérieur 4. Comme illustré à la figure 4, la deuxième paroi de butée 44 s'étend en aval de la première paroi de butée 43. Dans cet exemple, la deuxième paroi de butée 44 possède un diamètre intérieur supérieur au diamètre du corps tubulaire 10 et inférieur à celui de l'organe de blocage 12. Ainsi, la deuxième paroi de butée 44 entre en contact avec l'organe de blocage 12 lors d'un déplacement vers l'aval. Les deuxièmes moyens de butée 44 sont en amont des premiers moyens de butée 43.

De plus, il va de soi que le raccord de liaison 3 pourrait comprendre d'autres moyens de butée pour empêcher le retrait du manchon principal de la première canalisation. Notamment, les moyens de butée pourraient se présenter sous une forme analogue aux moyens de verrouillage qui vont être présentés par la suite.

En référence à la figure 4, l'organe d'étanchéité 5 est monté coulissant selon l'axe W dans la cavité intérieure du manchon extérieur 4. Dans cet exemple, le jeu de coulissement est faible entre l'organe d'étanchéité 5 et le manchon extérieur 4, ce qui engendre des frottements. Le jeu de coulissement est configuré de manière à autoriser un coulissement uniquement lorsque l'opérateur réalise un déplacement volontaire en appliquant un effort au manchon extérieur 4. Autrement dit, l'organe d'étanchéité 5 ne peut pas se déplacer dans le manchon extérieur 4 du seul fait de la gravité et/ou sous l'effet des vibrations. Dans cet exemple, le jeu de coulissement lors d'une translation selon l'axe X est inférieur à 6.5 mm.

L'organe d'étanchéité 5 est configuré pour relier de manière étanche les deux extrémités de connexion 1A, 2B. A cet effet, il possède un diamètre intérieur sensiblement supérieur au diamètre extérieur des portions longitudinales 111, 211 des embouts 11, 21 des canalisations 1, 2. Un tel dimensionnement permet avantageusement d'éviter à un volume important de liquide de stagner dans l'organe d'étanchéité 5, ce qui est particulièrement avantageux pour le transport d'eau potable ou de carburant.

En référence à la figure 4, l'organe d'étanchéité 5 comporte un corps cylindrique 50, s'étend axialement selon l'axe W et ouvert selon l'axe W, dans lequel est monté un joint d'étanchéité amont 51 apte à coopérer avec l'extrémité de connexion 1A de la première canalisation 1 et un joint d'étanchéité aval 52 apte à coopérer avec l'extrémité de connexion 2B de la deuxième canalisation 2. Dans cet exemple, les joint d'étanchéité 51, 52 sont solidaires et forment un élément d'étanchéité monobloc. Dans cette forme de réalisation, chaque joint d'étanchéité 51, 52 est en matériau élastique.

Toujours en référence à la figure 4, les moyens de verrouillage se présentent sous la forme d'un organe de verrouillage 6 qui est périphérique et monté intérieurement au manchon extérieur 4. Dans cet exemple, l'organe de verrouillage 6 comporte deux mâchoires articulées qui sont adaptées pour être ouvertes à l'état déverrouillé et fermées à l'état verrouillé. L'organe de verrouillage 6 est en matériau élastique et est configuré pour retrouver sa forme de l'état verrouillée après une déformation.

De manière plus précise, l'organe de verrouillage 6 est configuré pour se déformer radialement lors de son contact avec l'organe de blocage 22 de la deuxième canalisation 2 lors du déplacement du raccord de liaison 3 vers l'aval. Comme indiqué précédemment, l'organe de blocage 22 de la deuxième canalisation 2 comporte une paroi évasée de manière à guider la déformation de l'organe de verrouillage 6. De préférence, l'organe de verrouillage 6 est adapté pour se déformer sous l'effet d'un effort mécanique appliqué par l'opérateur. Après le contact avec l'organe de blocage 22 de la deuxième canalisation 2, l'organe de verrouillage 6 se rétracte radialement.

Comme illustré à la figure 3, l'organe de verrouillage 6 est monté à l'extrémité aval du manchon extérieur 4 de manière à s'étendre en aval de l'organe de blocage 22 de la deuxième canalisation 2 en position verrouillée. Ainsi, le manchon extérieur 4 ne peut plus se déplacer vers l'amont. L'extrémité aval du manchon extérieur 4 comporte une ouverture de verrouillage 41 permettant à l'organe de verrouillage 6 de se dilater radialement. L'organe d'étanchéité 5 est monté coulissant selon l'axe X dans la cavité intérieure du manchon extérieur 4 et est bloqué en aval par l'organe de verrouillage 6 et en amont par la première paroi de butée 43. Il va de soi que les moyens de verrouillage pourraient posséder des formes diverses.

Comme indiqué précédemment, l'organe de verrouillage 6 étant déformable entre un état verrouillé et un état déverrouillé, le raccord de liaison 3 comporte des moyens de sécurisation configurés pour empêcher une déformation à l'état verrouillé. Autrement dit, dans cet exemple, les moyens de sécurisation empêchent une dilation radiale de l'organe de verrouillage 6.

Les moyens de sécurisation sont montés dans l'ouverture de verrouillage 41. Ainsi, l'opérateur peut manuellement sécuriser l'organe de verrouillage 6. Dans cet exemple, les moyens de sécurisation se présentent sous la forme d'un organe de sécurisation en forme de lame curviligne dont la forme est modifiée entre son état sécurisé et non sécurisé. Ainsi, un opérateur peut déterminer de manière rapide et pratique si un raccordement est sécurisé par simple observation visuelle. Il va de soi que les moyens de sécurisation pourraient posséder des formes diverses.

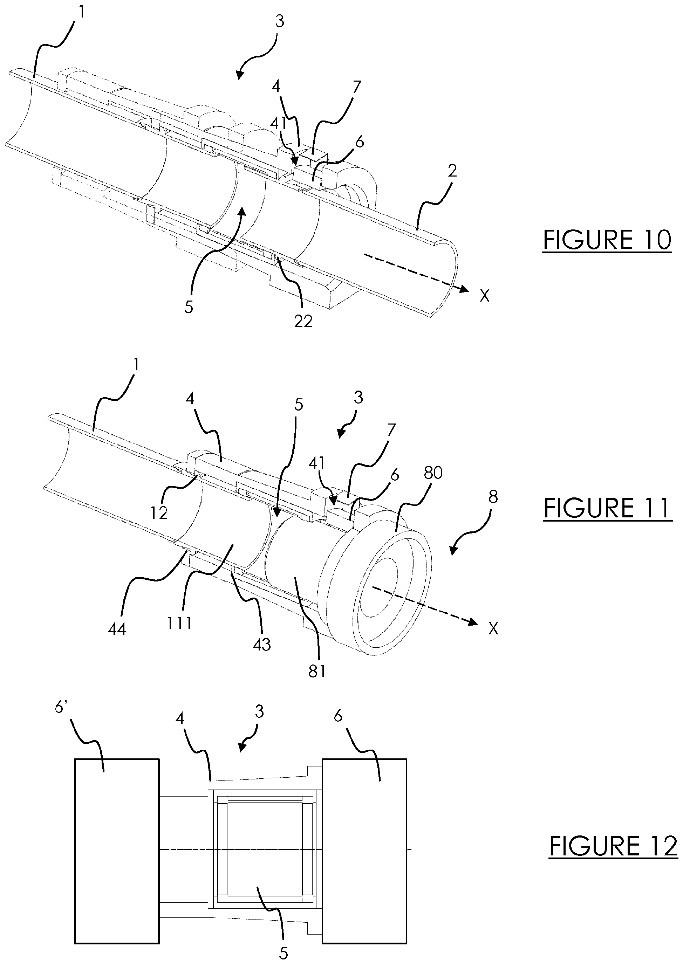

Pour assembler le raccord de liaison 3 à la première canalisation 1, le manchon extérieur 4 est introduit d'aval en amont sur le corps tubulaire 10 de la première canalisation 1 puis le premier embout 11 est fixé, d'aval en amont, sur le corps tubulaire 10, par exemple, par sertissage, soudage ou collage. Ainsi, le manchon extérieur 4 ne peut plus être retiré. Puis, l'organe d'étanchéité 5 est introduit d'aval en amont de manière à s'étendre de manière radiale extérieure à la deuxième portion longitudinale 111 de la première canalisation 1 et de manière radiale intérieure au manchon extérieur 4. Afin d'éviter tout endommagement ou mouvement relatif dans le raccord de liaison 3 lors de son transport, un bouchon 8 est, de préférence, introduit à l'extrémité aval de manière à s'étendre dans l'organe d'étanchéité 5 comme illustré à la figure 11.

Comme cela sera présenté par la suite, le raccord de liaison 3 peut être rendu amovible de la première canalisation 1.

Il va dorénavant être présenté un procédé de raccordement d'une première canalisation 1 et d'une deuxième canalisation 2 au moyen d'un raccord de liaison 3. Dans cet exemple, les canalisations 1, 2 ont été préalablement solidarisées à une structure d'un aéronef et ne sont pas mobiles les unes par rapport aux autres.

En référence à la figure 5, les extrémités de connexion 1A, 2B des canalisations 1, 2 sont fixes et espacées d'un jeu de raccordement axial Jx, le raccord de liaison 3 s'étendant sur l'extrémité de connexion 1A de la première canalisation 1. Le manchon extérieur 4 est en amont de l'extrémité de connexion 1A et l'organe d'étanchéité 5 s'étend de manière radiale extérieure à la deuxième portion longitudinale 111 de la première canalisation 1 et de manière radiale intérieure au manchon extérieur 4.

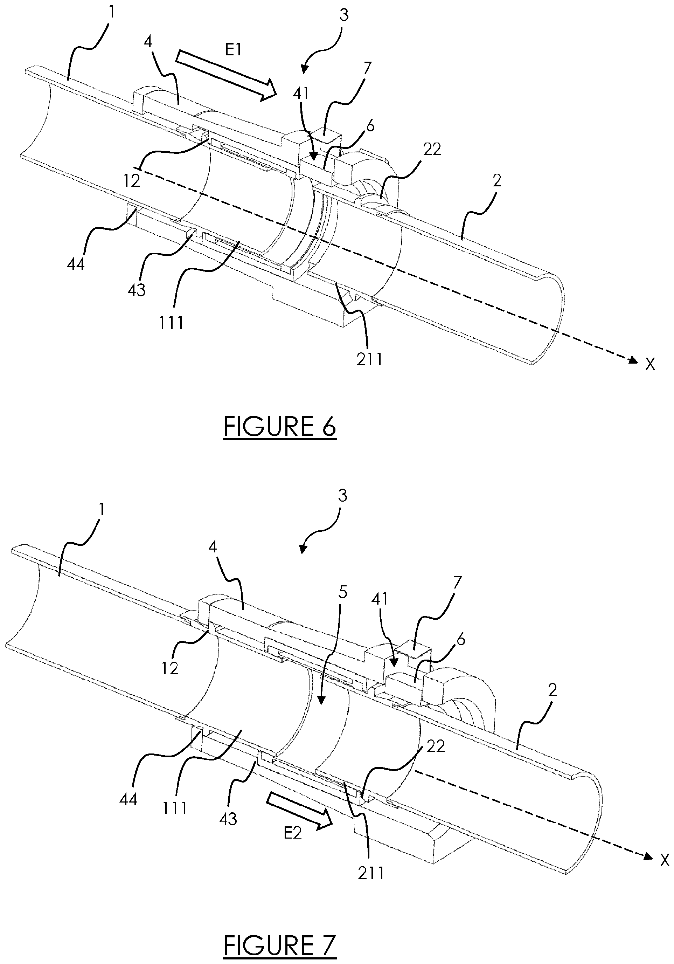

En référence à la figure 6, le procédé de réalisation d'un circuit de fluide selon l'invention comprend une étape de déplacement E1, de l'amont vers l'aval, du manchon extérieur 4 du raccord de liaison 3 jusqu'à l'organe de blocage 22 de la deuxième canalisation 2 de manière à déplacer l'organe d'étanchéité 5 entre les deux extrémités de connexion 1A, 2B pour assurer l'étanchéité entre les deux canalisations 1, 2.

Dans cet exemple, l'opérateur déplace le manchon extérieur 4 d'amont en aval avec une seule main de manière à ce que la première paroi de butée 43 évite l'organe de butée 12 de la première canalisation 1 et vienne en butée avec l'organe d'étanchéité 5 afin de le déplacer vers l'aval vers la deuxième canalisation 2. Au fur et à mesure du déplacement, l'organe d'étanchéité 5 atteint la deuxième portion longitudinale 211 de la deuxième canalisation 2 comme illustré à la figure 7. Les joints d'étanchéité 51, 52 coopèrent respectivement avec les deuxièmes portions longitudinales 111, 211 des canalisations 1, 2, ce qui assure une liaison étanche.

En référence à la figure 7, le procédé de réalisation comprend une étape de verrouillage E2 du manchon extérieur 4 sur la deuxième canalisation 2. Lors du déplacement aval du manchon extérieur 4, l'organe de verrouillage 6 entre en contact avec l'organe de blocage 22 de la deuxième canalisation 2 et se dilate radialement du fait de la forme évasée de l'organe de blocage 22. L'opérateur doit exercer une contrainte mécanique pour déformer l'organe de verrouillage 6 mais celle-ci demeure raisonnable. Au fur et à mesure du déplacement, l'organe de verrouillage 6 franchit l'organe de blocage 22 de la deuxième canalisation 2 puis se rétracte une fois située en aval comme illustré à la figure 7. Il en résulte que le manchon extérieur 4 ne peut plus se déplacer vers l'aval sans que l'opérateur exerce un effort sur le manchon extérieur.

De manière préférée, la course vers l'aval du manchon extérieur 4 est limitée par la deuxième paroi de butée 44 qui vient en butée avec l'organe de blocage 12 de la première canalisation 1 comme illustré à la figure 7. A titre d'exemple, la course d'amont en aval du manchon extérieur 4 est représentée de manière schématique à la figure 10. De manière avantageuse, la course axiale du manchon extérieur 4 sur l'extrémité de connexion 1A est réduite. Aussi, dans cet exemple, l'extrémité de connexion 1A doit uniquement comprendre une portion rectiligne de longueur supérieure à 6 cm avant de pouvoir être cintrée.

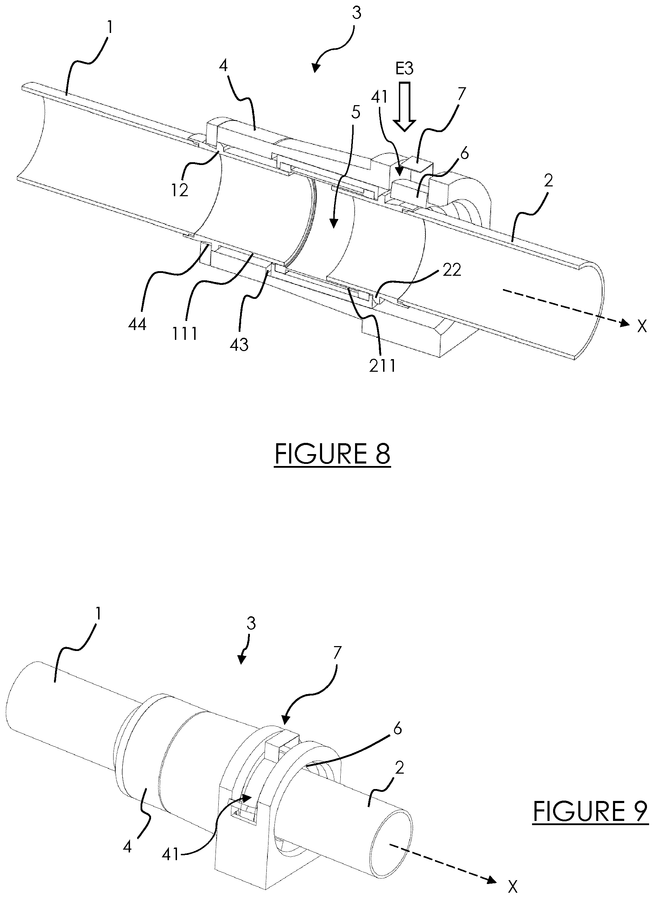

En référence à la figure 8, le procédé de réalisation comprend une étape de sécurisation E3 du verrouillage du manchon extérieur 4 sur la deuxième canalisation 2 de manière à empêcher tout déverrouillage involontaire. Dans cet exemple, l'opérateur appuie sur l'organe de sécurisation 7 qui se déplace dans l'ouverture de verrouillage 41 du raccord de liaison 3 afin d'empêcher tout dilatation radiale de l'organe de verrouillage 6. Le manchon extérieur 4 ne peut alors pas être retiré de manière involontaire. De manière préférée, l'opérateur doit utiliser un outil pour retirer la sécurité et retirer le manchon extérieur 4. Comme indiqué précédemment, un raccordement sécurisé est identifiable par simple observation visuelle, ce qui facilite les opérations d'inspection. A titre d'exemple, la figure 9 représente un raccordement non-sécurisé.

Grâce à l'invention, deux canalisations 1, 2 peuvent être raccordées de manière physique et fluidique par un opérateur sans risque d'erreur et de manière pratique. En outre, d'un point de vue de la maintenance, l'organe d'étanchéité 5 peut être retiré de manière pratique du manchon extérieur 4 lorsque les canalisations 1, 2 sont solidarisées à la structure d'un aéronef. Ainsi, en cas d'usure, l'organe d'étanchéité 5 peut être aisément remplacé sans nécessiter une opération de dépose du circuit de fluide.

De manière alternative et en référence à la figure 12 représentant une autre forme d'un raccord de liaison, en guise de deuxièmes moyens de butée, en lieu et place de la deuxième paroi de butée 44, le raccord de liaison pourrait comprendre des moyens de verrouillage amont 6' tels que présentés précédemment afin de permettre un retrait du manchon extérieur 4 de la première canalisation 1 après solidarisation de ladite première canalisation 1 à la structure de l'aéronef. Autrement dit, il suffit de déverrouiller les moyens de verrouillage amont 6' pour permettre un retrait du manchon extérieur 4 par l'aval. Un tel raccord de liaison 3 peut être remplacé de manière rapide et pratique.

## Revendications

1. Circuit de fluide, en particulier pour aéronef, comprenant une première canalisation (1), une deuxième canalisation (2) et un raccord de liaison (3),
- chaque canalisation (1, 2) comportant une extrémité de connexion (1A, 2B), s'étendant selon un axe X et définissant une surface intérieure et une surface extérieure, qui comporte un organe de blocage (12, 22) s'étendant en saillie radiale par rapport audit axe X depuis la surface extérieure, les extrémités de connexion (1A, 2B) des canalisations (1, 2) étant fixes et espacées d'un jeu de raccordement axial (Jx),
- le raccord de liaison (3) comprenant :
i. un manchon extérieur (4) qui s'étend selon l'axe X et est monté coulissant selon l'axe X à l'extrémité de connexion (1A) de la première canalisation (1), le manchon extérieur (4) étant configuré pour relier les deux extrémités de connexion (1A, 2B) lors d'un déplacement d'amont en aval,
ii. un organe d'étanchéité (5) qui s'étend selon l'axe X et est monté coulissant selon l'axe X dans ledit manchon extérieur (4), l'organe d'étanchéité (5) étant configuré pour relier de manière étanche les deux extrémités de connexion (1A, 2B),
iii. des moyens de verrouillage (6) configurés pour coopérer avec l'organe de blocage (22) de la deuxième canalisation (2) pour bloquer la translation dudit manchon extérieur (4) en amont vers la première canalisation (1),
- le raccord (3) étant configuré pour déplacer l'organe d'étanchéité (5) entre les deux extrémités de connexion (1A, 2B) pour assurer l'étanchéité lors du déplacement du manchon extérieur (4) vers l'aval jusqu'à l'organe de blocage (22) de la deuxième canalisation (2).

2. Circuit de fluide selon la revendication 1, dans lequel le manchon extérieur (4) comprend des premiers moyens de butée (43) configurés pour coopérer avec l'organe d'étanchéité (5) afin de le déplacer concomitamment au déplacement du manchon extérieur (4).

3. Circuit de fluide selon la revendication 2, dans lequel les premiers moyens de butée (43) s'étendent de manière radiale extérieure à l'organe de blocage (12) de la première canalisation (1) par rapport à l'axe X.

4. Circuit de fluide selon l'une des revendications 1 à 3, dans lequel le manchon extérieur (4) comprend des deuxièmes moyens de butée (44) configurés pour coopérer avec l'organe de blocage (12) de la première canalisation (1) pour empêcher le retrait du manchon extérieur (4) de la première canalisation (1).

5. Circuit de fluide selon l'une des revendications 1 à 4, dans lequel le manchon extérieur (4) comportant une extrémité amont destinée à s'étendre du côté de la première canalisation (1) en position verrouillée et une extrémité aval destinée à s'étendre du côté de la deuxième canalisation (2) en position verrouillée, les moyens de verrouillage (6) sont montés à l'extrémité aval du manchon extérieur (4).

6. Circuit de fluide selon l'une des revendications 1 à 5, dans lequel, les moyens de verrouillage étant déformables entre son état verrouillé et déverrouillé, le raccord de liaison (3) comporte des moyens de sécurisation configurés pour empêcher une déformation des moyens de verrouillage à l'état verrouillé.

7. Circuit de fluide selon l'une des revendications 1 à 6, dans lequel l'organe d'étanchéité (51) comporte au moins un joint d'étanchéité amont (51) apte à coopérer avec l'extrémité de connexion (1A) de la première canalisation (1) et au moins un joint d'étanchéité aval (52) apte à coopérer avec l'extrémité de connexion (2B) de la deuxième canalisation (2).

8. Aéronef comportant un circuit de fluide selon l'une des revendications 1 à 7, dans lequel la première canalisation (1) et la deuxième canalisation (2) sont solidarisées à une structure de l'aéronef, les extrémités de connexion (1A, 2B) des canalisations (1, 2) étant fixes et espacées d'un jeu de raccordement axial (Jx).

9. Procédé de réalisation d'un circuit de fluide selon l'une des revendications 1 à 7, les extrémités de connexion (1A, 2B) des canalisations (1, 2) étant fixes et espacées d'un jeu de raccordement axial (Jx), le raccord de liaison (3) s'étendant sur l'extrémité de connexion (1A) de la première canalisation (1), le procédé comprend :
- une étape de déplacement de l'amont vers l'aval du manchon extérieur (4) du raccord de liaison (3) jusqu'à l'organe de blocage (22) de la deuxième canalisation (2) de manière à déplacer l'organe d'étanchéité (5) entre les deux extrémités de connexion (1A, 2B) pour assurer l'étanchéité entre les deux canalisations (1, 2) et
- une étape de verrouillage du manchon extérieur (4) sur la deuxième canalisation (2).

10. Procédé de réalisation selon la revendication précédente, comprenant une étape de sécurisation du verrouillage du manchon extérieur (4) sur la deuxième canalisation (2) de manière à empêcher tout déverrouillage involontaire.

## Patentansprüche

1. Fluidkreislauf, insbesondere für Luftfahrzeug, umfassend eine erste Leitung (1), eine zweite Leitung (2) und ein Verbindungsanschluss (3),
- wobei jede Leitung (1, 2) ein Verbindungsende (1A, 2B) aufweist, sich gemäß einer Achse X erstreckt und eine Innenfläche und eine Außenfläche definiert, die ein Blockierorgan (12, 22) aufweist, das sich in Bezug auf die Achse X aus der Außenfläche radial hervorragend erstreckt, wobei die Verbindungsenden (1A, 2B) der Leitungen (1, 2) fest und in einem axialen Verbindungsspiel (Jx) beabstandet sind,
- wobei der Verbindungsanschluss (3) umfasst:
i. eine äußere Hülse (4), die sich gemäß der Achse X erstreckt und gleitend gemäß der Achse X auf dem Verbindungsende (1 A) der ersten Leitung (1) angebracht ist, wobei die äußere Hülse (4) konfiguriert ist, um die zwei Verbindungsenden (1A, 2B) bei einer Verlagerung von stromaufwärts nach stromabwärts zu verbinden,
ii. ein Dichtungsorgan (5), das sich gemäß der Achse X erstreckt und gleitend gemäß der Achse X in der äußeren Hülse (4) angebracht ist, wobei das Dichtungsorgan (5) konfiguriert ist, um die zwei Verbindungsenden (1A, 2B) dicht zu verbinden,
iii. Verriegelungsmittel (6), die konfiguriert sind, um mit dem Blockierorgan (22) der zweiten Leitung (2) zusammenzuwirken, um die Verschiebung der äußeren Hülse (4) stromaufwärts in Richtung der ersten Leitung (1) zu blockieren,
- wobei der Verbindungsanschluss (3) konfiguriert ist, um das Dichtungsorgan (5) zwischen den zwei Verbindungsenden (1A, 2B) zu verlagern, um bei der Verlagerung der äußeren Hülse (4) nach stromabwärts bis zum Blockierorgan (22) der zweiten Leitung (2) die Dichtigkeit zu gewährleisten.

2. Fluidkreislauf nach Anspruch 1, wobei die äußere Hülse (4) erste Anschlagmittel (43) umfasst, die konfiguriert sind, um mit dem Dichtungsorgan (5) zusammenzuwirken, um es gleichzeitig mit der Verlagerung der äußeren Hülse (4) zu verlagern.

3. Fluidkreislauf nach Anspruch 2, wobei sich die ersten Anschlagmittel (43) radial außerhalb zum Blockierorgan (12) der ersten Leitung (1) in Bezug auf die Achse X erstrecken.

4. Fluidkreislauf nach einem der Ansprüche 1 bis 3, wobei die äußere Hülse (4) zweite Anschlagmittel (44) umfasst, die konfiguriert sind, um mit dem Blockierorgan (12) der ersten Leitung (1) zusammenzuwirken, um das Entfernen der ersten Leitung (1) aus der äußeren Hülse (4) zu verhindern.

5. Fluidkreislauf nach einem der Ansprüche 1 bis 4, wobei die äußere Hülse (4) ein stromaufwärtiges Ende aufweist, das bestimmt ist, sich in verriegelter Position auf der Seite der ersten Leitung (1) zu erstrecken und ein stromabwärtiges Ende, das bestimmt ist, sich in verriegelter Position auf der Seite der zweiten Leitung (2) zu erstrecken, wobei die Verriegelungsmittel (6) am stromabwärtigen Ende der äußeren Hülse (4) angebracht sind.

6. Fluidkreislauf nach einem der Ansprüche 1 bis 5, wobei, da die Verriegelungsmittel zwischen ihrem verriegelten und entriegelten Zustand verformbar sind, der Verbindungsanschluss (3) Sicherungsmittel aufweist, die konfiguriert sind, um eine Verformung der Verriegelungsmittel im verriegelten Zustand zu verhindern.

7. Fluidkreislauf nach einem der Ansprüche 1 bis 6, wobei das Dichtungsorgan (51) mindestens eine stromaufwärtige Dichtung (51) aufweist, die imstande ist, mit dem Verbindungsende (1A) der ersten Leitung (1) zusammenzuwirken, und mindestens eine stromabwärtige Dichtung (52), die imstande ist, mit dem Verbindungsende (2B) der zweiten Leitung (2) zusammenzuwirken.

8. Luftfahrzeug, aufweisend einen Fluidkreislauf nach einem der Ansprüche 1 bis 7, wobei die erste Leitung (1) und die zweite Leitung (2) mit einer Struktur des Luftfahrzeugs fest verbunden sind, wobei die Verbindungsenden (1A, 2B) der Leitungen (1, 2) fest und in einem axialen Verbindungsspiel (Jx) beabstandet sind.

9. Herstellungsverfahren eines Fluidkreislaufs nach einem der Ansprüche 1 bis 7, wobei die Verbindungsenden (1A, 2B) der Leitungen (1, 2) fest und in einem axialen Verbindungsspiel (Jx) beabstandet sind, wobei sich der Verbindungsanschluss (3) über das Verbindungsende (1A) der ersten Leitung (1) erstreckt, wobei das Verfahren umfasst:
- einen Schritt der Verlagerung von stromaufwärts nach stromabwärts der äußeren Hülse (4) des Verbindungsanschlusses (3) bis zum Blockierorgan (22) der zweiten Leitung (2), so dass das Dichtungsorgan (5) zwischen den zwei Verbindungsenden (1A, 2B) verlagert wird, um die Dichtigkeit zwischen den zwei Leitungen (1, 2) zu gewährleisten, und
- einen Schritt der Verriegelung der äußeren Hülse (4) auf der zweiten Leitung (2).

10. Herstellungsverfahren nach vorangehendem Anspruch, umfassend einen Schritt der Sicherung der Verriegelung der äußeren Hülse (4) auf der zweiten Leitung (2), so dass jedwede unbeabsichtigte Entriegelung verhindert wird.

## Claims

1. Fluid circuit, in particular for aircraft, comprising a first conduit (1), a second conduit (2) and a connection (3),
- each conduit (1, 2) comprising a connecting end (1A, 2B), extending along an axis X and defining an inner surface and an outer surface, which comprises a blocking member (12, 22) extending, radially protruding with respect to said axis X from the outer surface, the connecting ends (1A, 2B) of the conduits (1, 2) being fixed and spaced by an axial connection clearance (Jx),
- the connection (3) comprising:
i. an outer sleeve (4) which extends along the axis X and is mounted sliding along the axis X to the connecting end (1A) of the first conduit (1), the outer sleeve (4) being configured to connect the two connecting ends (1A, 2B) during a movement from upstream to downstream,
ii. a sealing member (5) which extends along the axis X and is mounted sliding along the axis X in said outer sleeve (4), the sealing member (5) being configured to connect sealed the two connecting ends (1A, 2B),
iii. locking means (6), configured to cooperate with the blocking member (22) of the second conduit (2) to block the translation of said outer sleeve (4) upstream towards the first conduit (1),
- the connection (3) being configured to move the sealing member (5) between the two connecting ends (1A, 2B) to ensure sealing during the movement of the outer sleeve (4) downstream up to the blocking member (22) of the second conduit (2).

2. Fluid circuit according to claim 1, wherein the outer sleeve (4) comprises first stop means (43) configured to cooperate with the sealing member (5) in order to move it together with the movement of the outer sleeve (4).

3. Fluid circuit according to claim 2, wherein the first stop means (43) extend radially externally to the blocking member (12) of the first conduit (1) with respect to the axis X.

4. Fluid circuit according to one of claims 1 to 3, wherein the outer sleeve (4) comprises second stop means (44) configured to cooperate with the blocking member (12) of the first conduit (1) to prevent the removal of the outer sleeve (4) of the first conduit (1).

5. Fluid circuit according to one of claims 1 to 4, wherein the outer sleeve (4) comprising an upstream end configured to extend on the side of the first conduit (1) in a locked position and a downstream end configured to extend on the side of the second conduit (2) in a locked position, the locking means (6) are mounted at the downstream end of the outer sleeve (4).

6. Fluid circuit according to one of claims 1 to 5, wherein, the locking means being deformable between the locked and unlocked state, the connection (3) comprises securing means configured to prevent a deformation of the locking means to the locked state.

7. Fluid circuit according to one of claims 1 to 6, wherein the sealing member (51) comprises at least one upstream sealing seal (51) capable of cooperating with the connecting end (1A) of the first conduit (1) and at least one downstream seal (52) capable of cooperating with the connecting end (2B) of the second conduit (2).

8. Aircraft comprising a fluid circuit according to one of claims 1 to 7, wherein the first conduit (1) and the second conduit (2) are secured to a structure of the aircraft, the connecting ends (1A, 2B) of the conduits (1, 2) being fixed and spaced by an axial connection clearance (Jx).

9. Method for producing a fluid circuit according to one of claims 1 to 7, the connecting ends (1A, 2B) of the conduits (1, 2) being fixed and spaced by an axial connection clearance (Jx), the connection (3) extending over the connecting end (1A) of the first conduit (1), the method comprises:
- a step of moving, from upstream to downstream, the outer sleeve (4) of the connection (3) up to the blocking member (22) of the second conduit (2) so as to move the sealing member (5) between the two connecting ends (1A, 2B) to ensure sealing between the two conduits (1, 2), and
- a step of locking the outer sleeve (4) on the second conduit (2).

10. Production method according to the preceding claim, comprising a step of securing the locking of the outer sleeve (4) on the second conduit (2) so as to prevent any unintentional unlocking.
